# EUROPÄISCHE PATENTANMELDUNG

(11) **EP 2 541 116 A1**
(43) Veröffentlichungstag der Anmeldung: **02.01.2013**
(21) Anmeldenummer: 11171957.1
(22) Anmeldetag: 29.06.2011
(51) Int. Cl.: F16L 27/08, F16J 15/38

(54) **Drehdurchführung**

(71) Anmelder: Vrska, Daniel, 6760 Kistelek (HU)
(72) Erfinder: Vrska, Daniel, 6760 Kistelek (HU)
(74) Vertreter: Fritz, Edmund Lothar

(57) **Zusammenfassung**

Drehdurchführung mit einem stationären Gehäuse, in dem ein Ende einer Hohlwelle (4) von einem außenseitig anliegenden Lager (20) drehbar gefasst angeordnet ist, wobei das Gehäuse ein Lagerteilgehäuse (21) umfasst, welches das Lager und das Hohlwellenende aufnimmt und wobei das Gehäuse ein stationäres Anschlussteilgehäuse (14,15) umfasst und zwischen Lagerteilgehäuse und Anschlussteilgehäuse ein Gehäusespalt (18) ausgebildet ist, wobei zwischen der Stirnseite der Hohlwelle und dem stationären Anschlussteilgehäuse eine Dichtungseinrichtung angeordnet ist, umfassend mindestens einen Gleitring (1) und mindestens einen Gegenring (3). Die Aufgabe der vorliegenden Erfindung besteht darin, eine Drehdurchführung der zuvor beschriebenen Art weiter zu verbessern im Hinblick auf die Beständigkeit der Dichtungsringe (1,3) und somit Verlängerung der Lebensdauer einer solchen Gleitringdichtung. Erfindungsgemäß ist vorgesehen, dass der Gleitring (1) wenigstens über einen Teil seiner axialen Länge innenseitig auf einer axialen Verlängerung (22) der Hohlwelle gehalten ist und/oder der Gegenring (3) wenigstens über einen Teil seiner axialen Länge innenseitig auf einem achsparallelen Schenkel eines Ringelements (5) aufliegt.

## Beschreibung

Die vorliegende Erfindung betrifft eine Drehdurchführung mit einem stationären Gehäuse, in dem ein Hohlwellenende von einem außenseitig anliegenden Lager drehbar gefasst angeordnet ist, wobei das Gehäuse ein Lagerteilgehäuse umfasst, welches das Lager und das Hohlwellenende aufnimmt und wobei das Gehäuse ein stationäres Anschlussteilgehäuse umfasst, wobei zwischen der Stirnseite der Hohlwelle und dem stationären Anschlussteilgehäuse eine Dichtungseinrichtung angeordnet ist, umfassend mindestens einen Gleitring und mindestens einen Gegenring.

Axiale Gleitringdichtungen für Drehdurchführungen (rotary joint) sind seit langem bekannt. Sie dienen dazu rotierende und mit einem Fluid durchspülte Hohlwellen und ähnliches gegenüber einem stationären Gehäuse abzudichten.

Das Grundprinzip einer axialen Gleitringdichtung besteht darin, dass zwei einander gegenüberliegende axiale Dichtungsflächen aufeinander anliegen und relativ zueinander rotieren, wobei sie einen Dichtungsspalt bilden. Dabei ist eine mitdrehende, ringförmige Dichtungsfläche auf dem rotierenden Körper als Gleitring angeordnet. Auf dem stationären Teil befindet sich die dichtende Gegenfläche als Gegenring. Die Auswahl der Werkstoffe für die Ausbildung des Gleitringes und/oder Gegenringes ist abhängig von den jeweiligen Anwendungsbedingungen, wie aufliegender Druck auf den Dichtungen, Innendruck, Art des fluiden Mediums, Drehgeschwindigkeit und anderes. Übliche Werkstoffe sind Graphitwerkstoffe, Metall, Keramik oder Kunststoff, insbesondere Teflon ®. Im Sinne der vorliegenden Erfindung ist es nicht notwendig, dass Gleitring oder Gegenring aus einem der zuvor genannten Materialien gesondert hergestellt ist. Vielmehr kann wenigstens eine der zuvor genannten Ringe auch als eine plane Oberfläche des stationären Teils und/oder der rotierenden Hohlwelle ausgebildet werden. Methoden zur Auswahl und Anbringung geeigneter Werkstoffe zur Herstellung des Dichtungsringpaares in der zuvor genannten Art für jeweilige Anwendungszwecke sind dem Fachmann bekannt.

Aus der DE 10 2008 046 890 B4 ist eine Drehdurchführung der eingangs genannten Gattung bekannt geworden. Der Gegenring wird bei dieser bekannten Drehdurchführung auf einem Gegenringträger angeordnet, welcher einstückig ist mit einem radial nach außen ragenden Flansch. Dieser Gegenringträger ist axial verschiebbar und wird über Federn beaufschlage, um so einen Anpressdruck zwischen Gleitring und Gegenring zu gewährleisten. Problematisch ist bei derartigen Drehdurchführungen für rotierende und mit einem Fluid durchspülte Medien immer die Dichtigkeit im Bereich zwischen der mitdrehenden ringförmigen Dichtungsfläche des Gleitrings und der dichtenden Gegenfläche des stationären Gegenrings. Der von innen einwirkende Druck des Fluids wirkt auf die Dichtungsflächen von Gleitring und Gegenring ein von innen nach außen und kann zu Beschädigungen an den dichtungsflächen führen.

Die Aufgabe der vorliegenden Erfindung besteht darin, eine Drehdurchführung der zuvor beschriebenen Art weiter zu verbessern im Hinblick auf die Beständigkeit der Dichtungsringe und somit Verlängerung der Lebensdauer einer solchen Gleitringdichtung.

Die Lösung dieser Aufgabe liefert eine Drehdurchführung der eingangs genannten Gattung mit den kennzeichnenden Merkmalen des Hauptanspruchs.

Erfindungsgemäß ist vorgesehen, dass der Gleitring wenigstens über einen Teil seiner axialen Länge innenseitig auf einer axialen Verlängerung der Hohlwelle gehalten ist und/oder der Gegenring wenigstens über einen Teil seiner axialen Länge innenseitig auf einem achsparallelen Schenkel eines Ringelements aufliegt.

Im Rahmen der vorliegenden Erfindung ist definitionsgemäß der Gleitring derjenige, der sich mit der Hohlwelle dreht, während der Gegenring, der an dem Gleitring so anliegt, dass die jeweiligen Stirnflächen aneinander liegen, derjenige ist, der zum stationären Teil des Gehäuses der Vorrichtung hin abdichtet.

Bei umfangreichen Versuchen im Rahmen der vorliegenden Erfindung wurde festgestellt, dass es zur Erhöhung der Beständigkeit der Dichtungsanordnung vorteilhaft ist, wenn der Gegenring wenigstens über einen Teil seiner axialen Länge innenseitig auf einem achsparallelen Schenkel eines Ringelements aufliegt, da der Gegenring so gegenüber dem von dem Fluid von radial innenseitig ausgehenden Druck geschützt ist. Dieser Druck wirkt somit nicht mehr unmittelbar auf den Gegenring ein, sondern auf das genannte Ringelement.

Dadurch, dass bevorzugt der Gleitring wenigstens über einen Teil seiner axialen Länge innenseitig auf einer axialen Verlängerung der Hohlwelle gehalten ist, wird auch der Gleitring innenseitig abgestützt und gegen den Druck des heißen Fluids, welches einen Strömungsdruck von radial innen nach außen ausübt, geschützt. Diese axiale Verlängerung der Hohlwelle kann beispielsweise dadurch ausgebildet sein, dass an der Hohlwelle eine Art Schulter ausgebildet ist, in deren Bereich die Hohlwelle eine verringerte Materialstärke aufweist, aber einen gleichbleibenden Innenquerschnitt aufweist, so dass der Gleitring dort einen Sitz hat.

Weiterhin kann es bevorzugt so sein, dass der Gleitring nicht unmittelbar auf der vorgenannten axialen Verlängerung oder Schulter der Hohlwelle aufliegt, sondern ein L-förmiger Ring zwischengeschaltet ist. Dieser L-förmige Ring hat einen achsparallelen Schenkel und einen radial ausgerichteten Schenkel. Der Gleitring kann dann innenseitig wenigstens über einen Teil seiner Länge auf dem achsparallelen Schenkel des im Querschnitt L-förmigen Rings aufliegen, welcher wiederum mit diesem achsparallelen Schenkel auf der Außenseite der axialen Verlängerung der Hohlwelle aufliegt. Der radial ausgerichtete Schenkel dieses L-förmigen Rings liegt dann an derjenigen Stirnseite des Gleitrings an, die dem Gegenring abgewandt ist.

Gleitring und Gegenring sind bei der vorgenannten Konfiguration nur über einen geringen Teil ihrer jeweiligen axialen Länge dem innenseitig dem Druck des Fluids ausgesetzt und haben durch Membran und Hohlwelle jeweils ein Auflager. Es verbleibt nur eine geringe axiale Länge beider Dichtungselemente, wo diese dem Druck des Fluids unmittelbar ausgesetzt sind, nämlich dort wo sich der Spalt zwischen Hohlwelle und Membranelement befindet. Das Aufbrechen der Dichtfläche, dort wo beide Dichtungselemente mit ihren jeweiligen Sitrnflächen aufeinander treffen, wird dadurch verhindert.

Eine mögliche bevorzugte Lösungsvariante im Rahmen der vorliegenden Erfindung sieht vor, dass dieses Ringelement ein im Querschnitt L-förmiges Membranelement aus einem elastischen Material oder aus Metall ist, wobei ein radial nach außen gerichteter Schenkel des Membranelements an einer Stirnfläche des Gegenrings anliegt. Die auf den Gegenring ausgeübte Kraft, die in der Regel durch eine Druckfeder ausgeübt wird, die den gegenring in axialer Richtung beaufschlagt und gegen den Gleitring presst, wird somit erfindungsgemäß von dem Membranelement auf den Gegenring übertragen. Dieses Membranelement kann aus einem elastischen Material bestehen, beispielsweise aber auch aus Metall. Es kann beispielsweise flach sein, gewellt oder eine andere Form haben.

Eine Abdichtung zwischen dem Membranelement und dem Gegenring kann beispielsweise dadurch weiter verbessert werden, dass innenseitig an dem achsparallelen Schenkel des L-förmigen Membranelements ein separater innerer Ring angeordnet ist, welcher radiale Druckkräfte aus dem Innenraum der Hohlwelle aufnimmt und den Gegenring entlastet und welcher einen achsparallelen Schenkel des Membranelements gegen die Innenseite des Gegenrings drückt. Hier unterscheidet sich die erfindungsgemäße Lösung wesentlich von der eingangs erwähnten Lösung aus dem Stand der Technik, bei der der Gegenring an seiner Innenseite praktisch freiliegt und nur außenseitig ein Widerlager hat, so dass das heiße unter Druck stehende Fluid (zum Beispiel Dampf) auf die Innenseite des Gegenrings einwirkt.

Weiter vorteilhaft ist es, wenn nicht das Membranelement unmittelbar von der Kraft einer Druckfeder axial beaufschlagt wird, sondern ein Druckring vorgesehen ist, welcher in axialer Richtung an der dem Gegenring gegenüberliegenden Seite des radial nach außen gerichteten Schenkels des L-förmigen Membranelements angeordnet ist, welcher das Membranelement in axialer Richtung beaufschlagt, wobei der Druckring wiederum von der Kraft einer am Anschlussteilgehäuse gelagerten Druckfeder beaufschlagt wird. Das Membranelement wird auf diese Weise von dem Druckring auf einer vergleichsweise großen Fläche gleichmäßig beaufschlagt und überträgt die Kraft auf den Gegenring, wobei es in sich verformbar ist. Dies ist besser, als wenn der Gegenring von einem starren Druckelement unmittelbar axial beaufschlagt wird.

Besonders bevorzugt ist es so, dass das im Querschnitt L-förmige Membranelement im Bereich seines radial nach außen gerichteten Schenkels zwischen zwei separaten Gehäusesegmenten des Anschlussteilgehäuses oder zwischen zwei separaten ringförmigen Gehäusesegmenten klemmend aufgenommen ist. Dadurch wird zum einen mittels des Membranelements zwischen den beiden Gehäuseelementen abgedichtet und außerdem halten Membranelement und Gehäuse den Gegenring, welcher auch in radialer Richtung geklemmt werden kann, wodurch verhindert wird, dass bei auftretender Reibung zwischen den jeweiligen Stirnflächen von Gegenring und Gleitring, der Gegenring mit dem Gleitring mitrotiert. Die Gehäusesegmente können dazu an die Form des Membranelements angepasst sein. Gehäusesegmente und Druckring können die Druckkräfte aufnehmen und dadurch das Membranelement von Druck entlasten. Das Membranelement kann beispielsweise auch aus Metall und auch mit größerer Materialstärke ausgebildet sein und dann auch höhere Kräfte aufnehmen.

Eine alternative Variante der erfindungsgemäßen Aufgabenlösung beschreibt Anspruch 8. Demnach ist ein Membranelement aus Metall oder einem elastomeren Werkstoff vorgesehen, welches mit einem radial nach außen gerichteten Schenkel zwischen zwei separaten Gehäusesegmenten des Anschlussteilgehäuses klemmend gehalten ist und welches den Gegenring in axialer Richtung beaufschlagt, wobei das Membranelement in axialer Richtung gesehen auf der dem Gegenring abgewandten Seite von einem Druckring mit etwa T-förmigem Querschnitt oder L-förmigem Querschnitt beaufschlagt wird. Man könnte alternativ das Membranelement auch anderweitig im Gehäuse befestigen, was unter anderem auch davon abhängt, wie stabil das Membranelement ausgebildet ist. Beispielsweise können metallische Membranelemente mit ausreichender Materialstärke auch gegebenenfalls tragende Funktionen übernehmen, so dass die Befestigung am Gehäuse und dessen Ausbildung vereinfacht werden können.

Lagerteilgehäuse und Anschlussteilgehäuse können als separate Gehäuseelemente ausgebildet sein, zwischen denen ein Gehäusespalt ausgebildet ist, welcher durch die Dichtungsanordnung aus Gleitring und Gegenring abgedichtet wird. Das Anschlussteilgehäuse kann aber auch ein größeres durchgehendes Gehäuse sein, welches auch das Lager für die Hohlwelle aufnimmt und somit quasi auch das Lagerteilgehäuse mit umfasst, so dass sich am Ende der Hohlwelle der Spalt, welcher durch die Dichtungsanordnung abgedichtet wird, quasi innerhalb des größeren Gehäuses zum Lager hin befindet.

Es können auch mehr als ein Anschlussteilgehäuse vorhanden sein, so dass mehrere Anschlüsse für die Zuführung oder Ableitung eines Fluids durch die erfindungsgemäße Drehdurchführung möglich sind. Beispielsweise kann dazu konzentrisch innerhalb der Hohlwelle ein Anschlussrohr für einen weiteren Anschluss verlaufen.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 einen schematisch vereinfachten Längsschnitt durch eine Drehdurchführung gemäß einer ersten alternativen Ausführungsvariante der vorliegenden Erfindung;
Figur 2 einen schematisch vereinfachten Längsschnitt durch eine Drehdurchführung gemäß einer zweiten alternativen Ausführungsvariante der vorliegenden Erfindung;
Figur 3 einen schematisch vereinfachten Längsschnitt durch eine Drehdurchführung gemäß einer dritten alternativen Ausführungsvariante der vorliegenden Erfindung;
Figur 4 einen schematisch vereinfachten Längsschnitt durch eine Drehdurchführung gemäß einer vierten alternativen Ausführungsvariante der vorliegenden Erfindung;
Figur 5 einen schematisch vereinfachten Längsschnitt durch eine Drehdurchführung gemäß einer ersten alternativen Ausführungsvariante der vorliegenden Erfindung.

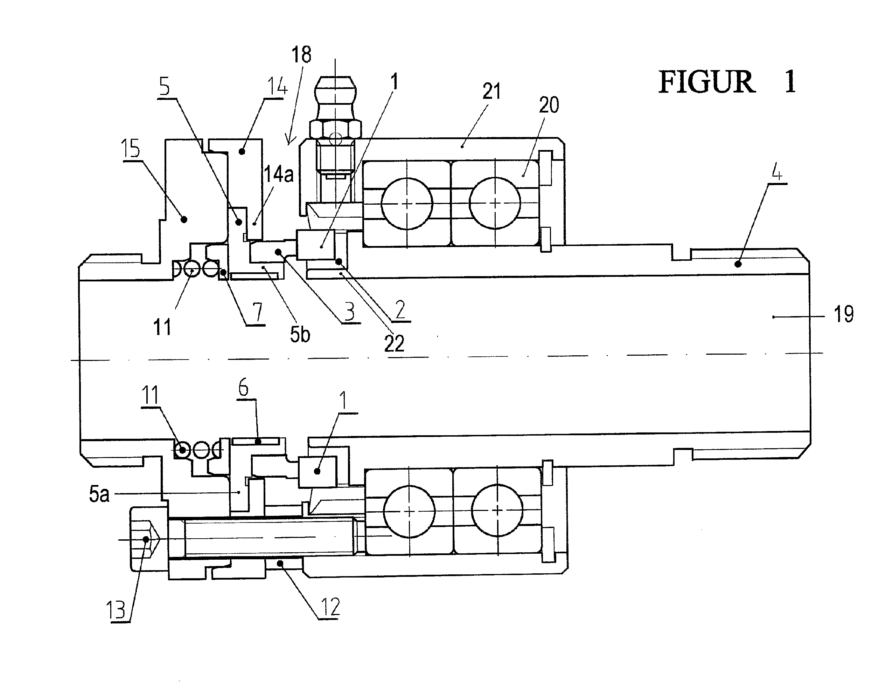

Nachfolgend wird zunächst auf Figur 1 Bezug genommen. Diese zeigt im schematisch vereinfachten Längsschnitt eine Drehdurchführung gemäß einer ersten alternativen Ausführungsvariante der vorliegenden Erfindung. Die gezeigt Drehdurchführung umfasst eine Hohlwelle 4, die über ein Kugellager 20 in einem Lagerteilgehäuse 21 drehbar gelagert ist. Weiterhin ist ein so genanntes Anschlussteilgehäuse vorhanden, welches aus zwei separaten Gehäusebereichen 14 und 15 besteht, welche wiederum wie im unteren Teil der Zeichnung erkennbar ist beispielsweise über Bolzenschrauben 13 mit dem Lagerteilgehäuse 21 fest verbunden sind. Die Hohlwelle 4 dreht sich somit über einen hier nicht gezeigten Antrieb in dem Lager 20, während das Lagerteilgehäuse 21 und die Gehäusebereiche 14 und 15 des Anschlussteilgehäuses stationär sind. Durch das Innere 19 der Hohlwelle 4 wird ein heißes Fluid geleitet, beispielsweise heißer Dampf.

Zwischen dem Lagerteilgehäuse 21 und dem Gehäusebereich 14 des Anschlussteilgehäuses befindet sich ein radial nach außen hin offener Gehäusespalt 18, welcher mittels einer spezifischen Dichtungsanordnung abzudichten ist, umfassend einen Gleitring 1 und einen Gegenring 3, welche jeweils mit ihren einander zugewandten Stirnseiten aneinander liegen. Die Besonderheit dieser Dichtungsanordnung besteht darin, dass sich der Gleitring 1 mit, da er auf der Hohlwelle 4 sitzt, mit dieser Hohlwelle dreht, während der Gegenring 3 an dem stationären Anschlussteilgehäuse gehalten ist und sich daher nicht mitdrehen sollte. Somit gleitet die Stirnfläche des Gleitrings 1 auf derjenigen des Gegenrings. Zudem unterliegt diese Dichtungsanordnung Verschleißbedingungen, da sie von dem unter Druck stehenden heißen Fluid aus dem Innenraum 19 der Hohlwelle 4 mit radial nach außen zum Spalt 18 hin einwirkenden Druck beaufschlagt wird.

Zwischen den beiden Gehäusebereichen 14 und 15 des Anschlussteilgehäuses ist eine Membran 5 klemmend gehalten, welche einen L-förmigen Querschnitt aufweist. Durch diese L-Querschnittsform ergibt sich ein sich radial nach außen hin erstreckender Schenkel 5 a und ein mit diesem verbundener sich achsparallel erstreckender Schenkel 5 b, der sich innenseitig befindet und der in etwa mit der Innenseite der Hohlwelle 4 fluchtet. Dadurch, dass die Membran 5 an ihrem Schenkel 5 a klemmend gehalten ist, wird eine Drehung der Membran verhindert. Auf dem achsparallelen Schenkel 5 b dieser Membran liegt der Gegenring 3 über den größten Teil seiner axialen Länge auf und zwar so, dass sich der Schenkel 5 b der Membran innenseitig von dem Gegenring 3 befindet, wodurch der Gegenring 3 gegen die Einwirkung des Drucks des Fluids geschützt wird. Der Gegenring 3 wird außerdem an seiner radial äußeren Längsseite von einem Vorsprung 14 a des Gehäusebereichs 14 gehalten, so dass der Gegenring 3 zwischen diesem Vorsprung und dem achsparallelen Schenkel 5 b fixiert ist, wodurch ein Mitdrehen des Gegenrings 3 verhindert wird. Nur ein vergleichsweise kurzer Abschnitt des Gegenrings 3 erstreckt sich über den Schenkel 5 b der Membran hinaus in dem Gehäusespalt 18 in Richtung auf den Gleitring 1 und nur dieser kurze Abschnitt des Gegenrings wird von dem Druck des Fluids beaufschlagt.

Die Bewegung des Gegenrings 3 in axialer Richtung, um diesen mit seiner Stirnseite an den Gleitring 1 anzudrücken, wird über den radialen Schenkel 5 a der Membran veranlasst, wobei die Membran 5 an der dem Gegenring 3 abgewandten Seite von einem Druckring 7 beaufschlagt wird. Dieser Druckring 7 erstreckt sich nach radial innen etwa so weit wie die Membran, beide fluchten somit etwa mit der Innenseite der Hohlwelle 4. Die gesamte stirnseitige Fläche des Druckrings 7 beaufschlagt somit die Membran 5. Der Druckring 7 wiederum wird an der der Membran 5 abgewandten Seite von einer Druckfeder 11 beaufschlagt, die in einer Nut des Gehäuseabschnitts 15 gehalten ist. Durch die Federkraft dieser Druckfeder 11, die über den Druckring 7 und die Membran 5 auf den Gegenring 3 übertragen wird, wird der Gegenring 3 mit seiner Stirnseite an den Gleitring angedrückt und der Gehäusespalt 18 wird dadurch abgedichtet.

Um die Abdichtung zwischen der Membran 5 und dem Gegenring 3 zu verbessern, ist weiterhin vorzugsweise noch ein innerer Ring 6 an der radialen Innenseite des Schenkels 5 b der Membran konzentrisch zu dem Schenkel 5 b angeordnet, der beispielsweise auch in einer Aussparung der Membran angebracht sein kann. Dieser innere Ring 6 drückt in Richtung radial nach außen auf die Innenseite der Membran (auf den achsparallelen Schenkel 5 b) und presst damit die Membran auf die innere Längsseite des Gegenrings 3, so dass damit die beiden einander zugewandten Dichtflächen von Membran und Gegenring gegeneinander gedrückt werden.

Auch der Gleitring 1 liegt an seiner Innenseite gegenüber dem Inneren 19 der Hohlwelle 4 nicht frei, sondern er liegt auf einem achsparallelen Schenkel eines L-Rings 2 auf, so dass der Gleitring 1 auch nur in geringerem Maße von dem heißen Fluid beaufschlagt wird. Dieser L-Ring 2 hat aufgrund seiner L-Form einen achsparallelen und einen radial sich nach außen hin erstreckenden Schenkel, wobei diese beiden Schenkel der L-Form den Gleitring 1 einfassen, zum einen an dessen radial innenseitiger Längsseite (wo er auf dem L-Ring 2 aufliegt) und außerdem an seiner dem Gegenring abgewandten Stirnseite. Der L-Ring 2 kann beispielsweise aus Gummi oder einem anderen elastomeren Werkstoff bestehen. Der L-Ring dichtet zur Hohlwelle hin ab. Der Gleitring 1 ist bei dieser Anordnung einfach und rasch mit sicherem Sitz auf der rotierenden Hohlwelle 4 zu montieren. Die Hohlwelle 4 ist in ihrem vorderen Bereich außen abgedreht oder weist eine axiale Verlängerung 22 mit außen verringerter Materialstärke auf, die einen Sitz für den L-Ring 2 bildet. Innenseitig geht die Hohlwelle 4 mit gleichbleibendem Innendurchmesser durch bis zu dem Gehäusespalt 18. Somit ist an der Hohlwelle 4 im Bereich der axialen Verlängerung 22 außenseitig eine Schulter gebildet, die Raum liefert für die Anordnung des L-Rings 2, auf dessen achsparallelem Schenkel wiederum radial außenseitig der Gleitring 1 aufliegt. Der Gleitring 1 sitzt somit nicht unmittelbar auf der Hohlwelle 4, sondern ist nur mittelbar auf dieser gelgert im Bereich der axialen endseitigen Verlängerung der Hohlwelle, und zwar derart, dass der Gleitring die Hohlwelle nur geringfügig in axialer Richtung überragt. Dadurch ist der Gleitring durch den L-Ring geschützt und ragt nur über einen geringeren Teil seiner axialen Länge in den Gehäusespalt 18 hinein. Mit seiner Stirnseite liegt der Gleitring an der diesem gegenüber liegenden Stirnseite des Gegenring an, wobei so der Gehäusespalt durch die Dichtungsringe verschlossen wird. Durch den L-Ring 2 hat der Gleitring 1 einen festen Sitz auf der Hohlwelle 4 im Bereich deren axialer Verlängerung.

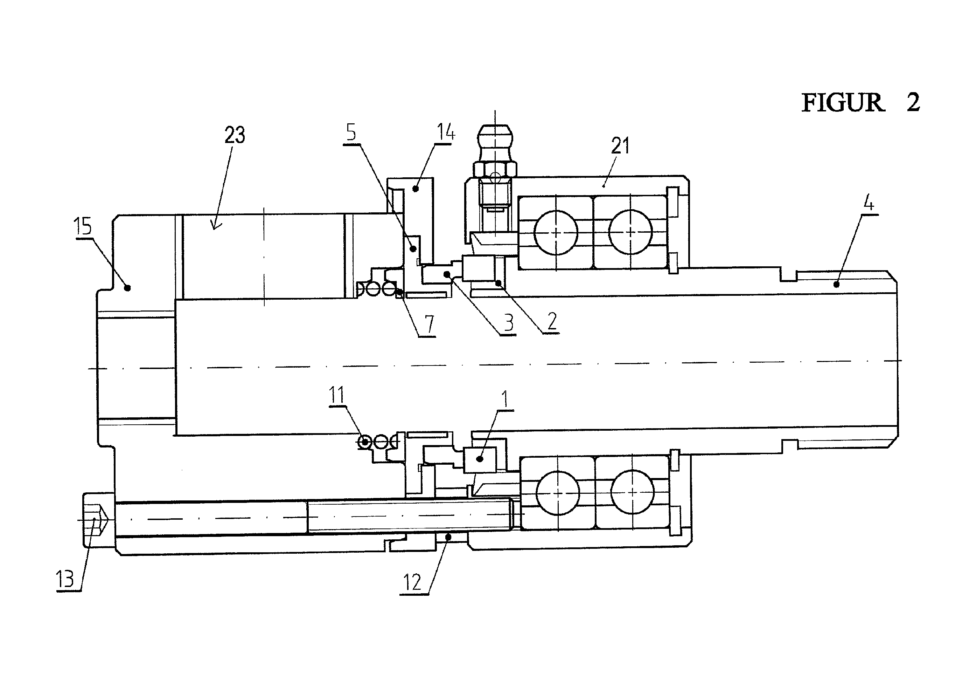

Nachfolgend wird unter Bezugnahme auf Figur 2 eine zweite alternative Ausführungsvariante der vorliegenden Erfindung erläutert. Im Bereich des Lagerteilgehäuses 21, der Hohlwelle 4, der Dichtungsanordnung mit Gleitring 1, L-Ring 2, Gegenring 3 und Membran 5 entspricht diese Variante der zuvor unter Bezugnahme auf Figur 1 beschriebenen Ausführungsform, so dass hier auf die Details nicht noch einmal näher eingegangen wird und für vergleichbare Bauteile die gleichen Bezugszeichen verwendet werden. Übereinstimmung besteht auch bis zu dem Gehäusebereich 14. Jedoch ist bei der Variante von Figur 2 das Anschlussteilgehäuse mit dem Gehäusebereich 15 länger ausgeführt und der Anschluss für das Fluid ist nicht nur in axialer Flucht offen, sondern es ist ein im rechten Winkel dazu angeordneter Anschlussbereich 23 vorgesehen. Da der Abstand zwischen dem Lagerteilgehäuse 21 und dem Gehäusebereich 15 des Anschlussteilgehäuses hier größer ist, ist die Verbindung der Gehäusebereiche über entsprechend längere Bolzenschrauben 13 erforderlich. Zwischen dem Lagerteilgehäuse 21 und dem Gehäusebereich 15 können Abstandsringe 12 angeordnet sein. Man sieht bei Vergleich der Figuren 1 und 2, dass die Drehdurchführung im Bereich des Anschlussteilgehäuses 14, 15 sehr unterschiedlich ausgeführt sein kann, wobei eine nach dem gleichen Prinzip aufgebaute Dichtungsanordnung verwendet wird.

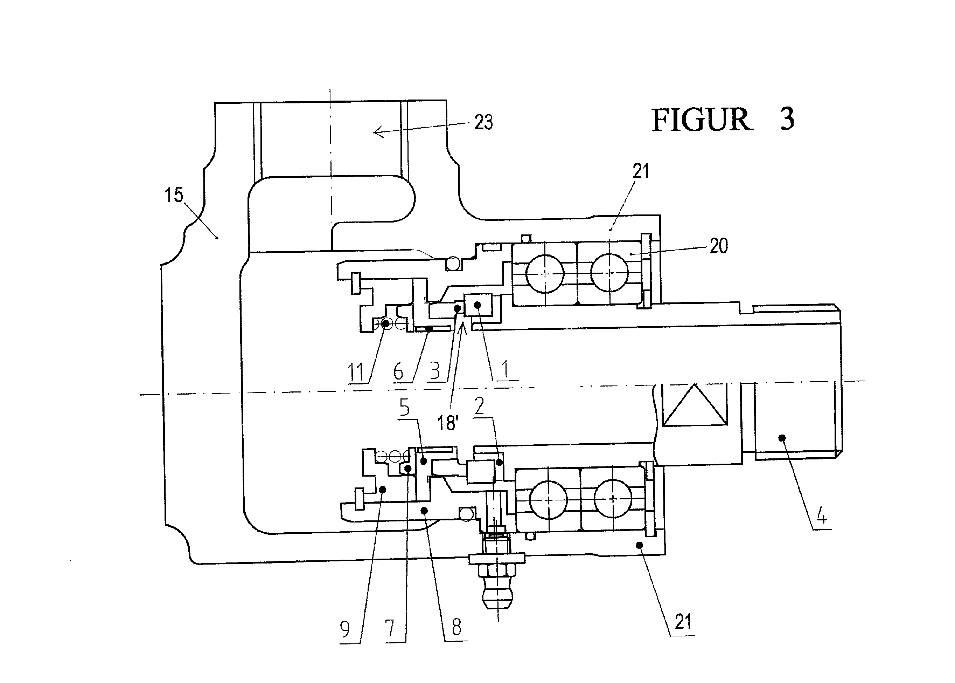

Nachfolgend wird unter Bezugnahme auf Figur 3 eine dritte alternative Ausführungsvariante der vorliegenden Erfindung erläutert. Der Anschlussbereich ist hier wiederum anders ausgebildet als bei den Varianten gemäß den Figuren 1 und 2. Bei Figur 3 ist ähnlich wie in Figur 2 ein Anschlussbereich 23 vorhanden, dessen Achse rechtwinklig zur Achse der Hohlwelle 4 verläuft. Die Hohlwelle 4 ist insgesamt kürzer als bei Figur 2 und das Gehäuse ist kompakter gebaut. Anders als bei Figur 2 ist bei Figur 3 die Stirnseite des Anschlussgehäuses geschlossen und das Anschlussteilgehäuse 15 ist hier einstückig mit dem Lagerteilgehäuse 21 ausgebildet. Dies bedeutet, dass sich derjenige Gehäuseteil 21, der das Lager 20 für die Hohlwelle 4 aufnimmt, an dem Gehäuseteil, der das Anschlussteilgehäuse 15 bildet befindet. Die Trennung mit den beiden Gehäusebereichen 14, 15 des Anschlussteilgehäuses wie in Figur 1 ist somit bei Figur 3 nicht vorhanden. Die Dichtungsanordnung mit Gleitring 1 und Gegenring 3 befindet sich innerhalb eines im Durchmesser größer ausgeführten Gehäuses, welches gleichzeitig das Anschlussteilgehäuse 15 und auch das Lagerteilgehäuse 21 bildet.

Druckfeder 11, Druckring 7, Membran 5, innerer Ring 6 sind hier ähnlich ausgebildet wie bei der Variante von Figur 1 und werden daher im Detail nicht erneut erläutert. Gleiches gilt für L-Ring 2, welches auf der axialen Verlängerung der Hohlwelle angeordnet ist, sowie die Dichtungsanordnung mit Gleitring 1 und Gegenring 3.

Um die Membran 5 klemmend zu halten, sind bei der Variante gemäß Figur 3 zwei austauschbare Befestigungsringe vorgesehen, nämlich ein äußerer Befestigungsring 8, der in etwa mit dem Lager 20 für die Hohlwelle 4 fluchtet und ein innerer Befestigungsring 9, welcher konzentrisch in dem äußeren Befestigungsring 8 angeordnet ist und welcher das Widerlager für die Druckfeder 11 bildet. Die Druckfeder ist dabei zwischen einem sich etwa radial erstreckenden Schenkel dieses inneren Befestigungsrings 9 und dem etwa L-förmigen Druckring 7 gehalten, welcher wiederum die sich axial in Richtung Hohlwelle anschließende Membran 5 beaufschlagt. Die Membran drückt dann wiederum in axialer Richtung gegen den Gegenring 3 der Dichtungsanordnung, welche ähnlich aufgebaut ist wie in den zuvor beschriebenen Ausführungsbeispielen.

Der Spalt 18' befindet sich bei der Variante von Figur 3 zwischen dem Ende der Hohlwelle 4 und der Membran 5, es handelt sich aber nicht um einen Gehäusespalt im Sinne der zuvor beschriebenen Ausführungsvarianten, da ja das Gehäuse nicht getrennt ist. Dieser Spalt 18' wird jedoch auch hier von der Dichtungsanordnung mit Gegenring 3 und Gleitring 1 nach radial außen hin verschlossen, wobei die Dichtungsanordnung verhindert, dass das heiße unter Druck stehende Fluid durch den Spalt nach außen in den Bereich des Lagers 20 gelangt. Der wesentliche Unterschied zu den beiden zuvor anhand von Figur 1 und 2 beschriebenen Ausführungsvarianten besteht somit darin, dass keine Trennung des Gehäuses in Lagerteilgehäuse und Anschlussteilgehäuse vorhanden ist, sondern sich das Lager für die Hohlwelle 4 in einem größeren Gehäuse befindet, welches gleichzeitig auch das Anschlussteilgehäuse 15 umfasst, wobei der Anschlussbereich 23 rechtwinklig zur Achse der Hohlwelle 4 abgeht und dass für die Halterung der Membran 5 und der Druckfeder 11 die beiden Befestigungsringe 8, 9 vorgesehen sind, die sich innerhalb des größeren Gehäuses befinden, während bei der Variante nach Figur 1 die beiden radial außen liegenden Gehäusebereiche 14, 15 diese Funktionen übernehmen.

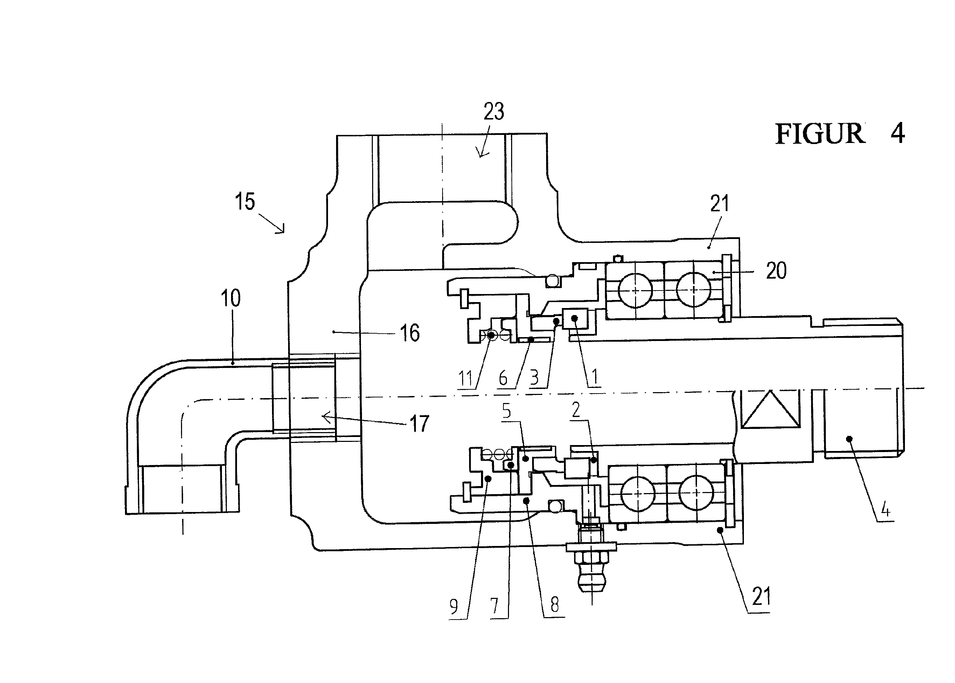

Die Ausführungsvariante gemäß Figur 4 ist derjenigen von Figur 3 recht ähnlich, so dass sich eine detaillierte Beschreibung der Bauelemente im Bereich der Dichtungsanordnung erübrigt. Jedoch ist hier das Gehäuse etwas anders aufgebaut, denn neben dem rechtwinklig zur Achse der Hohlwelle 4 abgehenden Anschlussbereich 23, ist ein weiterer Anschlusskanal 10 vorhanden, der eine Ableitung oder Zufuhr des Fluids ermöglicht, wobei in der Stirnwand 16 des Anschlussteilgehäuses 15 etwa in Verlängerung zur Achse der Hohlwelle eine Bohrung 17 beispielsweise mit Gewinde vorgesehen ist, so dass dort ein beispielsweise etwa rechtwinklig abgewinkelter Anschlussstutzen für den weiteren Anschlusskanal 10 eingeschraubt werden kann. Im Übrigen ist der Aufbau und die Form des einstückigen größeren Gehäuses, welches sowohl das Anschlussteilgehäuse 15 umfasst als auch das Lagerteilgehäuse 21 für das Lager 20, ähnlich wie in der Variante gemäß Figur 3.

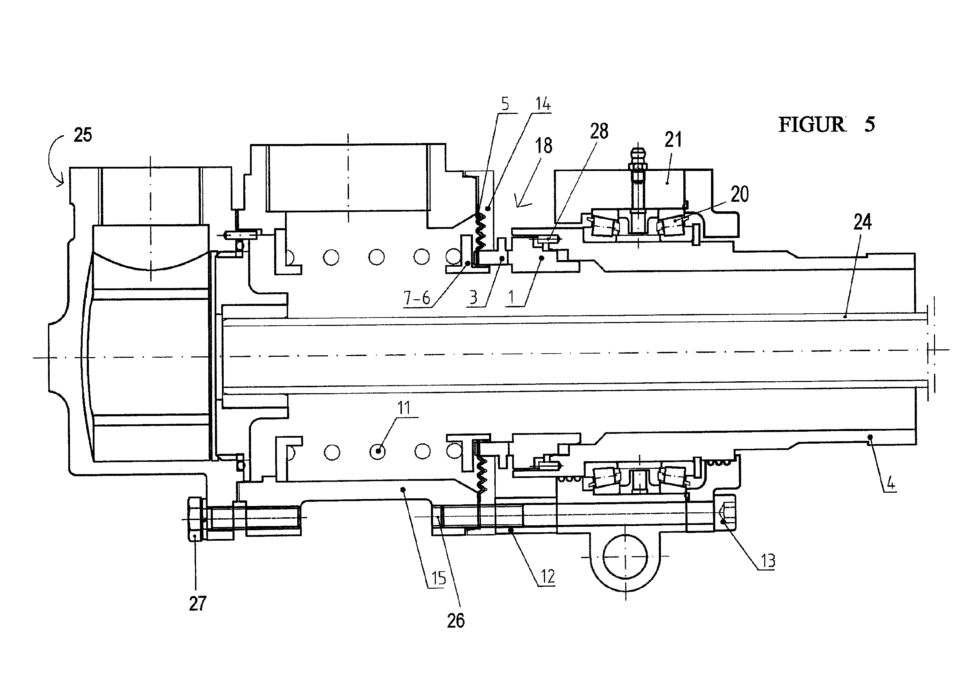

Nachfolgend wird unter Bezugnahme auf Figur 5 eine fünfte alternative Ausführungsvariante der vorliegenden Erfindung erläutert. Bei dieser Variante bestehen einige grundsätzliche Unterschiede im Aufbau des Gehäuses. Weiterhin ist hier ein Kegelrollenlager 20 vorgesehen und das Lagerteilgehäuse 21, welches dieses aufnimmt, ist auch etwas anders aufgebaut. Im Inneren der Hohlwelle 4 ist hier konzentrisch ein Anschlussrohr 24 angeordnet, welches endseitig mit dem Inneren eines zweiten Anschlussgehäuses 25 in Verbindung steht, so dass über das Anschlussrohr 24 und das zweite Anschlussgehäuse 25 ein Fluid rechtwinklig zur Achse der Hohlwelle abgeleitet oder zugeführt werden kann. Der Gehäusebereich 15 des ersten Anschlussteilgehäuses ist hier ähnlich wie bei der Variante von Figur 1 von dem Gehäusebereich 14 getrennt, das heißt es sind separate Bauteile 14, 15 vorgesehen, wobei der Gehäusebereich 15 des Anschlussteilgehäuses über eine Schraubverbindung 26 und einen Abstandsring 12 mit dem Lagerteilgehäuse 21 verbunden ist und auf der anderen Seite der Gehäusebereich 15 über eine weitere Schraubverbindung 27 mit dem zweiten Anschlussgehäuse 25 verbunden ist.

Der Druckring 7 und der innere Ring 6 sind hier aus einem Stück in Form eines Rings mit T-förmigem Querschnitt ausgebildet und dienen als Widerlager für die Druckfeder 11 einerseits und sie beaufschlagen andererseits die Membran 5. Diese Membran 5 ist wiederum zwischen den beiden Gehäusebereichen 14, 15 des Anschlussteilgehäuses klemmend gehalten, wobei die Membran hier aus Metall besteht und gegebenenfalls auch dicker ausgebildet werden kann, so dass unter Umständen dann der zweite Gehäusebereich 14 entfallen kann.

Da der kombinierte Druckring/innere Ring 6, 7 im Querschnitt T-förmig ausgebildet ist, hat dieser zwei achsparallele radial innere Schenkel und einen radial nach außen gerichteten mittigen Steg. Der in der Zeichnung rechte achsparallel Schenkel des T-förmigen Rings bietet ein Auflager für den Gegenring, während der zweite in der Zeichnung linke achsparallele Schenkel ein Auflager für die Druckfeder 11 bildet, wobei diese zudem den Steg des T-förmigen Rings 6/7 in achsparalleler Richtung beaufschlagt.

Wie in der Zeichnung erkennbar ist der Gleitring 1 hier in der Form komplexer und auch größer ausgeformt als in den zuvor beschriebenen Ausführungsbeispielen. Der L-Ring entfällt bei der Variante von Figur 5. Da die axiale Verlängerung der Hohlwelle hier ebenfalls nicht vorhanden ist, hat die Hohlwelle außen keine Schulter. Der Gleitring 1 sitzt hier nicht außen auf der Hohlwelle, sondern ist in einer Aussparung der Hohlwelle an dieser innenseitig befestigt, beispielsweise durch Befestigungselemente wie Schrauben 28, Stifte oder dergleichen. Der Gleitring 1 dreht sich somit auch hier mit der Hohlwelle 4 und seine anschlussseitige Stirnfläche liegt an der entsprechenden Stirnfläche des Gegenrings 3 an, so dass durch diese Dichtungsanordnung analog wie in dem Ausführungsbeispiel gemäß Figur 1 ein radial nach außen gehender Gehäusespalt 18 zwischen Anschlussteilgehäuse 14, 15 und Lagerteilgehäuse abgedichtet wird.

### Bezugszeichenliste

- 1: Gleitring
- 2: L-Ring
- 3: Gegenring
- 4: Hohlwelle
- 5: Membran
- 5 a: radial nach außen hin erstreckender Schenkel
- 5 b: achsparalleler Schenkel
- 6: innerer Ring
- 7: Druckring
- 8: äußerer Befestigungsring
- 9: innerer Befestigungsring
- 10: Anschlusskanal
- 11: Druckfeder
- 12: Abstandsring
- 13: Bolzenschrauben
- 14: Gehäusebereich
- 15: Gehäusebereich
- 16: Stirnwand
- 17: Bohrung
- 18: Gehäusespalt
- 18': Spalt
- 19: Inneres der Hohlwelle
- 20: Kugellager
- 21: Lagerteilgehäuse
- 22: axiale Verlängerung der Hohlwelle
- 23: Anschlussbereich
- 24: Anschlussrohr
- 25: zweites Anschlussgehäuse
- 26: Schraubverbindung
- 27: Schraubverbindung
- 28: Schraube, Stift

## Patentansprüche

1. Drehdurchführung mit einem stationären Gehäuse, in dem ein Hohlwellenende von einem außenseitig anliegenden Lager drehbar gefasst angeordnet ist, wobei das Gehäuse ein Lagerteilgehäuse umfasst, welches das Lager und das Hohlwellenende aufnimmt und wobei das Gehäuse ein stationäres Anschlussteilgehäuse umfasst, wobei zwischen der Stirnseite der Hohlwelle und dem stationären Anschlussteilgehäuse eine Dichtungseinrichtung angeordnet ist, umfassend mindestens einen Gleitring und mindestens einen Gegenring, **dadurch gekennzeichnet, dass** der Gleitring (1) wenigstens über einen Teil seiner axialen Länge innenseitig auf einer axialen Verlängerung (22) der Hohlwelle (4) gehalten ist und/oder der Gegenring (3) wenigstens über einen Teil seiner axialen Länge innenseitig auf einem achsparallelen Schenkel (5 b) eines Ringelements (5, 6, 7) aufliegt.

2. Drehdurchführung nach Anspruch 1, **dadurch gekennzeichnet, dass** der Gleitring (1) innenseitig wenigstens über einen Teil seiner Länge auf einem achsparallelen Schenkel eines im Querschnitt L-förmigen Rings (2) aufliegt, welcher wiederum mit diesem achsparallelen Schenkel auf der Außenseite der axialen Verlängerung (22) der Hohlwelle (4) aufliegt.

3. Drehdurchführung nach Anspruch 1 oder 2, **dadurch gekennzeichnet, dass** die axiale Verlängerung (22) der Hohlwelle (4) als Schulter ausgebildet ist, in deren Bereich die Hohlwelle eine verringerte Materialstärke aufweist, aber einen gleichbleibenden Innenquerschnitt aufweist.

4. Drehdurchführung nach einem der Ansprüche 1 bis 3, **dadurch gekennzeichnet, dass** das Ringelement, auf dessen achsparallelem Schenkel der Gegenring (3) aufliegt, ein im Querschnitt L-förmiges Membranelement (5) aus einem elastischen Material oder aus Metall ist, wobei ein radial nach außen gerichteter Schenkel (5 a) des Membranelements an einer Stirnfläche des Gegenrings anliegt.

5. Drehdurchführung nach Anspruch 5, **dadurch gekennzeichnet, dass** innenseitig an dem achsparallelen Schenkel (5 b) des L-förmigen Membranelements (5) ein separater innerer Ring (6) angeordnet ist, welcher radiale Druckkräfte aus dem Innenraum der Hohlwelle aufnimmt und den Gegenring (3) entlastet.

6. Drehdurchführung nach einem der Ansprüche 4 oder 5, **dadurch gekennzeichnet, dass** ein Druckring (6, 7) in axialer Richtung an der dem Gegenring (3) gegenüberliegenden Seite des radial nach außen gerichteten Schenkels des L-förmigen Membranelements (5) angeordnet ist, welcher das Membranelement in axialer Richtung beaufschlagt, wobei der Druckring wiederum von der Kraft einer am Anschlussteilgehäuse (15) gelagerten Druckfeder (11) beaufschlagt wird.

7. Drehdurchführung nach einem der Ansprüche 4 bis 6, **dadurch gekennzeichnet, dass** das im Querschnitt L-förmige Membranelement (5) im Bereich seines radial nach außen gerichteten Schenkels (5 a) zwischen zwei separaten Gehäusesegmenten (14, 15) des Anschlussteilgehäuses oder zwischen zwei separaten ringförmigen Gehäusesegmenten (8, 9) klemmend aufgenommen ist.

8. Drehdurchführung nach dem Oberbegriff des Anspruchs 1 oder nach Anspruch 1, **dadurch gekennzeichnet, dass** Membranelement (5) aus Metall oder einem elastomeren Werkstoff vorgesehen ist, welches mit einem radial nach außen gerichteten Schenkel zwischen zwei separaten Gehäusesegmenten (14, 15) des Anschlussteilgehäuses klemmend gehalten ist und welches den Gegenring (3) in axialer Richtung beaufschlagt, wobei das Membranelement in axialer Richtung gesehen auf der dem Gegenring abgewandten Seite von einem Druckring (6, 7) mit etwa T-förmigem oder L-förmigem Querschnitt beaufschlagt wird.

9. Drehdurchführung nach Anspruch 8, **dadurch gekennzeichnet, dass** der Druckring (6, 7) mit T-förmigem oder L-förmigem Querschnitt von der Kraft einer im Anschlussteilgehäuse gelagerten Druckfeder (11) beaufschlagt wird, wobei der Gegenring (3) mindestens über einen Teil seiner axialen Länge radial außen auf einem achsparallelen Schenkel des Druckrings aufliegt.

10. Drehdurchführung nach Anspruch 8 oder 9, **dadurch gekennzeichnet, dass** der Druckring (6, 7) mit T-förmigem Querschnitt einen radial nach außen hin weisenden Schenkel aufweist, welcher von der Druckfeder beaufschlagt wird und zwei radial innenseitig von diesem ausgehende achsparallele Schenkel aufweist, von denen der eine dem Gegenring (3) als Auflager dient und der andere als Auflager für die Druckfeder (11) dient.
